# EUROPÄISCHE PATENTSCHRIFT

(11) **EP 3 544 786 B1**
(45) Veröffentlichungstag und Bekanntmachung des Hinweises auf die Patenterteilung: **20.08.2025**
(21) Anmeldenummer: 17807702.0
(22) Anmeldetag: 20.11.2017
(51) Int. Cl.: B29C 64/153, B29C 64/307, B29C 64/364, B22F 3/105

(54) **TRANSPORTIEREN VON PULVERFÖRMIGEM AUFBAUMATERIAL FÜR DIE HERSTELLUNG DREIDIMENSIONALER OBJEKTE**
TRANSPORTATION OF PULVERULENT BUILD-UP MATERIAL FOR PRODUCING THREE-DIMENSIONAL OBJECTS
TRANSPORT DE MATÉRIAU DE CONSTRUCTION PULVÉRULENT POUR LA FABRICATION D'OBJETS TRIDIMENSIONNELS

(30) Priorität: 27.11.2016 DE 102016122838
(43) Veröffentlichungstag der Anmeldung: 02.10.2019
(73) Patentinhaber: FIT AG, 92331 Lupburg (DE)
(72) Erfinder: FRUTH, Carl, 92331 Lupburg (DE)
(74) Vertreter: Schneider, Andreas
(86) Internationale Anmeldenummer: PCT/EP2017/001359
(87) Internationale Veröffentlichungsnummer: WO 2018/095566

(56) Entgegenhaltungen:
- EP-A1- 1 514 622
- DE-C1- 19 950 101
- GB-A- 2 520 161

## Beschreibung

Die Erfindung betrifft allgemein den Bereich der Herstellung dreidimensionaler Objekte durch additive Fertigung. Insbesondere betrifft die Erfindung Verfahren und Vorrichtungen zum Transportieren von pulverförmigem Aufbaumaterial, das für die Herstellung dreidimensionaler Objekte verwendet wird.

Additive Fertigungsverfahren sind aus dem Stand der Technik bekannt. Beispiele hierfür sind Laserschmelzen, Maskensintern, Drop on Powder / Drop-on-Bed, Stereolithographie und dergleichen. Der Aufbau der Objekte erfolgt dabei in der Regel durch selektives Verfestigen eines schichtweise aufgetragenen Aufbaumaterials. Anlagen, mit denen ein solches Schichtbauverfahren durchgeführt wird, werden auch als Rapid Prototyping-Systeme bezeichnet. Diese Schichtbauverfahren dienen zur Herstellung von schichtweise aufgebauten Bauteilen aus verfestigbarem Material, wie Harz, Kunststoff, Metall oder Keramik, und werden beispielsweise zur Fertigung von technischen Prototypen verwendet. Dabei können mit Hilfe einer additiven Fertigungsmethode dreidimensionale Objekte direkt aus CAD-Daten hergestellt werden.

Bei einem solchen Schichtbauverfahren erfolgt der Aufbau der Objekte schichtweise, d. h. es werden Schichten des Aufbaumaterials sukzessive übereinander aufgetragen. Vor dem Aufbringen der jeweils nächsten Schichten werden die dem zu fertigenden Objekt entsprechenden Stellen in den jeweiligen Schichten selektiv verfestigt. Das Verfestigen erfolgt beispielsweise durch lokales Erhitzen des zumeist pulverförmigen Aufbaumaterials mit Hilfe einer Strahlungsquelle. Indem gezielt Strahlung in geeigneter Weise in die gewünschten Bereiche eingebracht wird, kann eine exakt definierte, beliebig geartete Objektstruktur erzeugt werden. Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden.

Bei der Herstellung der Objekte muß das verwendete pulverförmige Aufbaumaterial mindestens einmal, in der Regal aber mehrmals, von einem Ort an einen anderen, räumlich davon getrennten Ort transportiert werden, oder mit anderen Worten von einem Raum zu einem anderen Raum. Dies betrifft sowohl den Transport innerhalb der Schichtbauanlage selbst als auch den Transport in Anlagen zur Behandlung des Aufbaumaterials, also zur Verwendung in Nebenprozessen, wie Sieben, Mischen, Reinigen, Trocknen usw. Besonders kritisch ist der Transport des Aufbaumaterials zum Zweck der Pulverversorgung der Schichtbauanlage, insbesondere beim Befüllen und Entleeren der Prozeßkammer, in der der schichtweise Aufbau des dreidimensionalen Objekts erfolgt.

Dabei weisen die Prozeßkammer und andere Räume( Vorratsbehälter, Zu- und Abfuhrleitungen usw.) häufig unterschiedliche Atmosphären auf. Mit anderen Worten kann sich die Gaszusammensetzung, Temperatur, Feuchte, Druck usw. in den einzelnen Räumen unterscheiden. So kann beispielsweise in dem ersten Raum normale Luft vorhanden sein, während sich in dem zweiten Raum getrocknete Luft oder ein Schutzgas befindet. In den Räumen können sich dabei vergleichsweise preiswerte Gase, wie beispielsweise Stickstoff, oder aber auch teure Gase, wie beispielsweise Argon, befinden. Ein Raumwechsel ist in diesen Fällen stets mit einem Atmosphärenwechsel verbunden. Um eine Vermischung der einzelnen Atmosphären zu verhindern, beispielsweise um Verunreinigungen der Atmosphäre oder aber den Verlust eines teuren Gases zu vermeiden, wird daher eine Gastrennung der Räume benötigt. Ziel dabei ist es, eine einhundertprozentige Gastrennung zu erreichen, also ein Vermischen der Atmosphären möglichst vollständig zu verhindern. In der Praxis ist es oftmals ausreichend, wenn sichergestellt wird, daß kein mit Blick auf den Betrieb der Anlage relevanter Gasaustausch bzw. kein über einen tolerierbaren Wert hinausgehender Gasaustausch zwischen den Räumen stattfindet.

Um einen Materialtransport von Raum zu Raum unter Beibehaltung der Gastrennung der Räume durchzuführen, sind aus dem Stand der Technik verschiedene Schleusen- und/oder Abdichtkonstruktionen bekannt, wie beispielsweise Zellenradschleusen, Pendelklappenschleusen, sowie auch Ventile verschiedenster Bauart. Techniken, bei denen auf diese oder ähnliche Weise, teilweise unter Beibehaltung der Gastrennung der Räume, ein Pulvermaterial transportiert wird, sind in GB 2 520 161 A, DE 199 50 101 C1 und EP 1 514 622 A1 beschrieben. All diese Lösungen sind konstruktiv aufwendig, besonders dann, wenn eine zuverlässige Gastrennung benötigt wird. Als zusätzlich benötigte, zumeist bewegliche mechanische Komponenten erhöhen sie außerdem die Fehleranfälligkeit des Gesamtsystems. Das pulverförmige Baumaterial kann sich zwischen beweglichen Teilen der Schleusen festsetzen und diese blockieren. Ist eine Reinigung oder Reparatur erforderlich, muß die Schleuse ausgebaut und der Betrieb der Schichtbauanlage hierfür unterbrochen werden.

Eine Aufgabe der vorliegenden Erfindung ist es daher, eine einfache, betriebssichere und wartungsfreie Lösung für einen Materialtransport von Raum zu Raum wobei entweder der erste Raum oder der zweite Raum die Prozesskammer der Fertigungsanlage ist, bei gleichzeitiger Beeinflussung des Gasaustausches zwischen den beiden Räumen bereitzustellen, insbesondere unter Beibehaltung der Gastrennung der Räume.

Diese Aufgabe wird durch die in den unabhängigen Ansprüchen angegebenen Verfahren und Vorrichtungen gelöst.

Vorteilhafte Ausführungen der Erfindung sind in den Unteransprüchen angegeben.

In diesem Zusammenhang wird Schutz beansprucht
- für ein Verfahren zur additiven Fertigung, bei dem ein solcher Materialtransport stattfindet (Anspruch 1),
- für eine Fertigungsanlage für die additive Fertigung, bei der ein solcher Materialtransport stattfindet (Anspruch 4), und
- für ein Verfahren zum Transportieren von pulverförmigem Aufbaumaterial in einer Fertigungsanlage für die additive Fertigung (Anspruch 5).

Die im Folgenden im Zusammenhang mit den Verfahren erläuterten Vorteile und Ausgestaltungen gelten sinngemäß auch für die erfindungsgemäßen Vorrichtungen und umgekehrt.

Eine Kernidee der Erfindung besteht darin, das Aufbaumaterial während des Transports von dem einen Raum in den anderen Raum eine Pulversäule ausbilden zu lassen, die einen Gasaustausch zwischen den beiden Räumen beeinflußt, wobei entweder der erste Raum oder der zweite Raum die Prozeßkammer der Fertigungsanlage ist. Die Höhe der Pulversäule kann dann zur Beeinflussung dieses Gasaustausches gezielt verändert werden. Wird eine Gastrennung der Räume gewünscht, wird diese durch eine entsprechend ausgebildete Pulversäule gewährleistet, indem der Transportweg des Aufbaumaterials und damit der Gasweg von dem einen Raum in den anderen Raum durch das Aufbaumaterial selbst gasdicht verschlossen wird. Anstelle einer Gastrennung der Räume kann durch eine entsprechende Ausbildung der Pulversäule aber auch ein definierter Gasübergang bzw. Gastransport zwischen den beiden Räumen erfolgen. Insbesondere kann das den Raum durch den Transportwege des Aufbaumaterials verlassende bzw. das auf diesem Weg in den Raum eintretende Gasvolumen gezielt beeinflußt, insbesondere geregelt oder gesteuert, werden. Nachfolgend wird in erster Linie die Variante beschrieben, bei der eine Gastrennung gewünscht ist. Die Erläuterungen in diesem Zusammenhang gelten entsprechend auch für die Variante eines gezielten Gasübergangs.

Zur Gastrennung der Räume werden erfindungsgemäß keine zusätzlichen, insbesondere keine beweglichen mechanischen Teile, wie Schleusen der dergleichen, verwendet. Statt dessen dient das pulverförmige Baumaterial selbst, in Form einer Pulversäule, als gasdichter Verschluß des Transportweges des Baumaterials. Mit anderen Worten wird der Transportweg des Pulvers durch das Pulver selbst gasdicht verschlossen. Die Pulversäule dient als Gassperre, d. h. sie verhindert einen Gasaustausch zwischen den beiden Räumen, zwischen denen der Materialtransport erfolgt.

Zur Ausbildung der Gastrennung mit Hilfe der Pulversäule wird auch nicht irgendein zusätzliches Sperrmaterial verwendet, beispielsweise ein nicht zur additiven Fertigung benötigtes Material. Statt dessen wird das ohnehin in dem Raum benötigte bzw. in den Raum zu transportierende Aufbaumaterial verwendet. Dieses Material wird gleichzeitig als Verschlußmaterial für den Transportweg und damit zum Verschließen des Übergangs zwischen den beiden Räumen verwendet.

Zu diesem Zweck ist eine Transporteinrichtung (kein Teil der beanspruchten Erfindung) vorgesehen, die die Bildung einer Pulversäule ermöglicht. Vorzugsweise erfolgt die Bildung der Pulversäule aufgrund einer reinen Schwerkraftförderung des Pulvers, also dadurch, daß das Pulver infolge Schwerkraftwirkung nach unten fällt. Das Pulver unterliegt dann nur dem Druck seines eigenen Gewichts und wird in der Pulversäule entsprechend verdichtet, so daß es die gewünschte Gassperrfunktion ausübt. Die Pulversäule rutscht dabei nur unter Wirkung der Schwerkraft nach unten in Richtung einer Austritts- bzw. Auslaßöffnung und tritt anschließend in den Zielraum ein. Die Austritts- bzw. Auslaßöffnung ist dabei mit einem Verschlußmechanismus versehen, der im geschlossenen Zustand ein Austreten von Aufbaumaterial aus der Pulversäule verhindert. Hierfür ist ein vorzugsweise motorisch aus einer Verschlußstellung in eine Öffnungsstellung und zurück bewegbares, ansteuerbares Verschlußelement vorgesehen.

Der durch die Transporteinrichtung bereitgestellte Transportweg zwischen den Räumen wird durch die Pulversäule verschlossen. Die Transporteinrichtung bzw. der Transportweg kann als separate Verbindung zwischen den beiden Räumen ausgebildet sein. Zum Ausbilden der Pulversäule eignen sich neben anderen Mitteln u.a. Rohrleitungen, Trichter und dergleichen mit konstantem oder sich änderndem Querschnitt. Die Transporteinrichtung bzw. der Transportweg kann aber auch als Teil eines der beiden Räume ausgeführt sein. In beiden Fällen wird, entweder durch die Begrenzungen des Raumes selbst oder durch ein zusätzliches geeignetes Konstruktionsmittel ein definierter Raum für die Bildung der Pulversäule bereitgestellt, wobei die Transporteinrichtung insbesondere bei einer Realisierung mittels separater Elemente, neben einer Austritts- bzw. Auslaßöffnung auch eine definierte Zuführöffnung aufweisen kann.

Die Transporteinrichtung kann darüber hinaus Fördermittel aufweisen bzw. mit solchen Fördermitteln verbunden sein. Derartige Fördereinrichtungen dienen zur Zufuhr bzw. Abfuhr des pulverförmigen Aufbaumaterials, beispielsweise zur pneumatischen Pulverförderung mittels eines Trägergases.

Der Materialtransport dient dabei zum Eintragen und/oder Austragen bzw. zum Zuführen und/oder Abführen bzw. zum Füllen und/oder Entleeren bzw. zum Einlassen und/oder Auslassen von pulverförmigem Aufbaumaterial. Anders ausgedrückt erfolgt der auf diese Weise stattfindende Materialtransport beispielsweise aus einem Vorratsbehälter oder einer Förderleitung heraus in eine Prozeßkammer hinein bzw. aus einer solchen Prozeßkammer heraus in einen Vorratsbehälter oder eine Förderleitung hinein. Mit anderen Worten kann der von der Erfindung vorgeschlagene Materialtransport sowohl für eine Pulvereintragsvorrichtung als auch für eine Pulveraustragsvorrichtung verwendet werden, allgemein gesagt zur Pulverversorgung.

Bei dem pulverförmigen Aufbaumaterial kann es sich um ein beliebiges geeignetes Material handeln, insbesondere Metallpulver oder Kunststoffpulver. Bei dem Aufbaumaterial handelt es sich vorzugsweise um Feinpulver mit einer Korngröße von weniger als 0,5 mm. Je feiner das verwendete Pulver ist, desto dichter ist die durch das Material gebildete Pulversäule.

Zur Gewährleistung der Gastrennung wird in der Pulversäule stets eine Mindestmenge an Aufbaumaterial gehalten. Mit anderen Worten erfolgen die Zufuhr von Aufbaumaterial zum Aufbau der Pulversäule einerseits sowie die Entnahme von Aufbaumaterial aus der Pulversäule andererseits stets so, daß ein Mindestfüllstand der Pulversäule erhalten bleibt. Dabei kann sowohl die Zugabe von Aufbaumaterial zu der Pulversäule als auch die Entnahme von Aufbaumaterial aus der Pulversäule diskontinuierlich, kontinuierlich oder quasikontinuierlich erfolgen.

Die Regulierung der Pulverfüllhöhe zur Gewährleistung einer minimalen Höhe der Pulversäule erfolgt dabei insbesondere in Abhängigkeit von der Druckdifferenz zwischen den beiden Räumen und/oder der Korngröße des Pulvers und/oder weiteren Parametern. Mit Hilfe geeigneter Füllstandsensoren wird die Füllhöhe der Pulversäule kontinuierlich oder in geeigneten Zeitabständen überwacht. Wenn die Füllhöhe unter einem definierten Grenzwert abfällt, wird die Pulversäule wieder aufgefüllt, bis der gewünschte Füllwert erreicht ist. Die Regulierung der Pulverfüllhöhe erfolgt dabei vorzugsweise durch eine Regelung der Fördergeschwindigkeit des Pulvers.

Die Überwachung der Füllhöhe der Pulversäule kann direkt, beispielsweise mit Hilfe von Füllstandsensoren, oder indirekt, beispielsweise über die Ermittlung der aktuellen Druckdifferenz in den über die Pulversäule miteinander verbundenen Räumen, erfolgen.

Ein Ablassen von Aufbaumaterial aus der Pulversäule, also beispielsweise eine Zufuhr von Aufbaumaterial in den Prozeßraum bzw. einer Entnahme von Aufbaumaterial aus dem Prozeßraum, findet in jedem Fall nur in dem Maße statt, daß eine bestimmter Füllstand, nämlich eine Mindestfüllhöhe, erhalten bleibt. Zugleich findet eine solche Entnahme von Aufbaumaterial aus der Pulversäule sinnvollerweise erst dann statt, wenn ein bestimmter Füllstand (Mindestfüllhöhe plus X) vorliegt oder erreicht ist.

Zur Sicherstellung der Gastrennung bleibt in jedem Fall eine Mindestfüllhöhe bestehen, welche die Gasdichtheit zwischen den Räumen erhält und den Durchlaß von Gasen durch die Pulversäule und damit einen Gasaustausch zwischen den Räumen verhindert bzw. minimiert. Durch eine Regulierung bzw. Veränderung der Füllhöhe der Pulversäule, am einfachsten steuerbar durch eine Veränderung des definierten Grenzwertes der Füllhöhe der Pulversäule, kann die Gastrennung jedoch ebenso einfach verringert oder aber vollständig aufgehoben werden. Dies kann vorteilhaft genutzt werden, um auf besondere einfache Art und Weise einen definierten drucklosen Zufuhr von Additiven oder aber die Beimischung von Reaktionsgassen usw. in die Atmosphäre des Zielraumes zu bewerkstelligen. Mit anderen Worten kann der Gasaustausch zwischen den Räumen nicht nur verhindert, sondern auch kontrolliert eingestellt werden. Ein solches gezieltes Einstellen des Gasaustausches wird beispielweise realisiert, indem die Höhe der Pulversäule durch Auffüllen bzw. Ablassen von Aufbaumaterial erhöht bzw. verringert wird, sobald ein unterer Füllhöhe-Grenzwert unterschritten bzw. ein oberer Füllhöhe-Grenzwert überschritten wird, wobei anstelle der Füllhöhe-Grenzwerte auch andere, insbesondere der Füllhöhe entsprechende Grenzwerte, wie beispielsweise Druck-Grenzwerte, zur Steuerung herangezogen werden können.

Sind in einer Schichtbauanlage oder einer Anlage zur Behandlung des Aufbaumaterials mehrere Prozeßkammern vorhanden, die an eine gemeinsame Zufuhrleitung bzw. an eine gemeinsame Abfuhrleitung für das Aufbaumaterial angeschlossen sind, können innerhalb derselben Anlage nicht nur unterschiedliche Atmosphären innerhalb der verschiedenen Prozeßkammern vorhanden sein. Bei geeigneter Ausführung der Zufuhr- bzw. Abfuhrleitung und strikter Gastrennung der Räume können in unterschiedlichen Abschnitten der Leitungen auch jeweils unterschiedliche Atmosphären vorliegen.

Die Erfindung ist im Zusammenhang mit der Pulverversorgung einer Schichtbauanlage anwendbar, wobei das Aufbaumaterial unter Anwendung der Erfindung in die Prozeßkammer, in welcher der eigentliche Aufbauprozeß stattfindet, hinein und/oder aus der Prozeßkammer heraus transportiert wird. Bei der Anwendung der Erfindung bei Nebenprozessen kann die als Ziel- oder Ausgangsraum dienende Prozeßkammer die Reinigungskammer, Mischkammer oder dergleichen Vorzugsweise handelt es sich bei dem von der Erfindung genutztem Transportweg des Aufbaumaterials um den einzigen möglichen Transportweg des Aufbaumaterials in den Zielraum. Mit anderen Worten ist die Anlage vorzugsweise derart ausgeführt, daß die erfindungsgemäße Art und Weise des Transportierens von Aufbaumaterial die einzige Möglichkeit ist, Aufbaumaterial der Prozeßkammer zuzuführen bzw. der Prozeßkammer Aufbaumaterial zu entnehmen. Die Anlage kann daher besonders einfach aufgebaut sein.

Vorzugsweise handelt es sich bei dem Transportweg auch um den einzigen vorhandenen Weg für einen Gastransport bzw. Gasaustausch zwischen den Räumen. Die den Transportweg erfindungsgemäß verschließende Pulversäule stellt somit die einzige Möglichkeit dar, die Verbindung zwischen den beiden Räumen gas- bzw. druckdicht zu verschließen. Dies gilt vorzugsweise auch dann, wenn zum Verschließen der Austritts- bzw. Auslaßöffnung ein Verschlußmechanismus vorgesehen ist. Mit anderen Worten muß dieser Verschlußmechanismus nicht gas- bzw. druckdicht ausgeführt sein.

Im Unterschied zu den aus dem Stand der Technik bekannten Systemen, bei denen jede zwischen zwei Räumen ausgebildete Pulversäule ihrer Natur gemäß den Gasaustausch zwischen diesen Räumen beeinflußt, nämlich je nach ihrer Höhe entweder verhindert oder in mehr oder weniger starkem Umfang zuläßt, betrifft die vorliegende Erfindung nicht lediglich eine ungewollte, willkürliche Beeinflussung des Gasaustausches, sondern eine absichtsvolle, gezielte Kontrolle der Höhe der Pulversäule des Aufbaumaterials zum Zweck einer gezielten Beeinflussung des Gasaustausches zwischen Räumen mit verschiedenen Atmosphären.

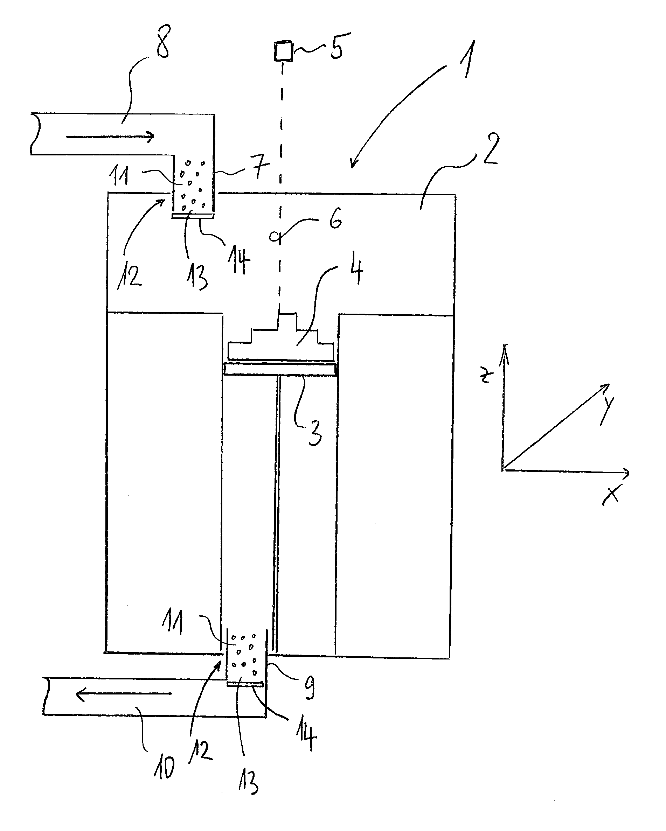

Ein Ausführungsbeispiel der Erfindung wird nachfolgend anhand der Zeichnung näher erläutert. Hierbei zeigt die einzige Figur einen Teil einer Schichtbauanlage. Die Figur zeigt die Erfindung nicht maßstabsgerecht, dabei lediglich schematisch und nur mit ihren wesentlichen Bestandteilen.

Eine Schichtbauanlage 1, die beispielsweise nach dem Lasersinterverfahren arbeitet, umfaßt eine mit einer speziellen Prozeßatmosphäre gefüllte Prozeßkammer 2, in der eine in einer x-y-Ebene angeordnete Aufbauplattform 3 vorgesehen ist, auf der ein dreidimensionales Objekt 4 in bekannter Art und Weise schichtweise erzeugt wird. Bei dem Aufbaumaterial handelt es sich um ein geeignetes Kunststoffpulver. Nach der Herstellung einer Schicht n wird zur Herstellung einer neuen Schicht n+1 die Aufbauplattform 3 mit den bereits erstellten und erhärteten Schichten um eine bestimmte Weglänge nach unten verfahren. Hierzu dient eine Antriebseinrichtung (nicht dargestellt), beispielsweise ein Elektromotor, zum Erzeugen einer Bewegung der Aufbauplattform 3 in z-Richtung, d. h. senkrecht zu der Aufbauebene.

Die Schichtbauanlage 1 umfaßt wenigstens eine Verfestigungsstrahlungsquelle 5, die Strahlungsenergie zum lokalen Erhitzen von Aufbaumaterial bereitstellt, um dieses selektiv zu verfestigen. Bei der Strahlungsquelle handelt es sich beispielsweise um einen Laser, der einen in die Prozeßkammer 3 hineinreichenden Laserstrahl 6 geführt abgibt.

Die Schichtbauanlage 1 umfaßt außerdem eine Aufbringeinrichtung 7, mit der Aufbaumaterial zur Laufzeit der Anlage von Zeit zu Zeit als dünne Schicht auf die Aufbauplattform 3 oder eine bereits vorhandene Aufbauschicht aufgebracht und verteilt wird. Bei der Aufbringeinrichtung 7 handelt es sich beispielsweise um eine in die Prozeßkammer 2 hineinreichende oder mit der Prozeßkammer 2 über einen Transportweg für Aufbaumaterial verbundene Einrichtung zum Aufbringen einer Pulverschüttung. Der Aufbringeinrichtung 7 wird das pulverförmige Aufbaumaterial über eine angeschlossene Bereitstellungseinrichtung zugeführt. Bei der Bereitstellungseinrichtung handelt es sich beispielsweise um eine Zufuhrleitung 8, wobei die Bereitstellung durch pneumatische Pulverförderung mittels eines Trägergases erfolgt.

Zwischen dem Verfestigen einer Schicht n und dem Aufbringen von neuem Aufbaumaterial für eine nachfolgende Schicht n+1 kann es vorgesehen sein, überschüssiges Aufbaumaterial von der Aufbauplattform 3 zu entfernen. In diesem Fall ist eine hierfür geeignete Einrichtung (nicht abgebildet) vorgesehen, beispielsweise in Form eines Abstreifmessers oder dergleichen. In jedem Fall enthält die Prozeßkammer 2 nach Abschluß des Aufbaus des Objektes 4 überschüssiges bzw. nicht benötigtes, loses Aufbaumaterial, das der Prozeßkammer 2 wieder entnommen werden kann. Zu diesem Zweck ist eine mit der Prozeßkammer 2 über einen Transportweg für Aufbaumaterial verbundene bzw. in die Prozeßkammer 2 hineinreichende Entnahmeeinrichtung 9 vorgesehen. An die Entnahmeeinrichtung 9 angeschlossen ist eine Abtransporteinrichtung, beispielsweise in Form einer Abfuhrleitung 10, mit deren Hilfe das Aufbaumaterial abtransportiert werden kann, was wiederum mittels einer pneumatischen Pulverförderung erfolgt.

Die Bereitstellungseinrichtung 8 und die Aufbringeinrichtung 7 einerseits sowie die Abtransporteinrichtung 10 und die Entnahmeeinrichtung 9 andererseits sind jeweils mit einer entsprechenden Steuerung (nicht abgebildet) verbunden, die die Materialzufuhr in die Prozeßkammer 2 und den Materialauftrag bzw. die Materialentnahme aus der Prozeßkammer 2 und den Abtransport steuert. Diese Steuerungen sind vorzugsweise in Form von Computerprogrammen realisiert, welche die für die Steuerung relevanten Schritte durchführen, insbesondere die Förderleistung der Pulverzufuhr bzw. -abfuhr regelt, wenn das Computerprogramm auf einem Rechner mit einem Prozessor ausgeführt wird. Dabei handelt es sich vorzugsweise um den zentralen Steuerungs- oder Prozeßrechner (nicht abgebildet) der Schichtbauanlage 1.

Bei der Zufuhr von Aufbaumaterial im Rahmen der Pulverversorgung der Schichtbauanlage 1 wird das pulverförmige Aufbaumaterial unter alleiniger Wirkung der Schwerkraft, also in z-Richtung, von Zeit zu Zeit von einem ersten Raum, der Zufuhrleitung 8, in einen räumlich von dem ersten Raum getrennten zweiten Raum, die Prozeßkammer 2, transportiert, wobei sich die Atmosphären in diesen Räumen beispielsweise hinsichtlich ihrer Gaszusammensetzung voneinander unterscheiden. Während dieses Transports das Aufbaumaterial wird eine Pulversäule 11 ausgebildet, die einen Gasaustausch zwischen den beiden Räumen 8, 2 verhindert. Die Aufbringeinrichtung 7 dient als Transporteinrichtung für das Aufbaumaterial und ist derart ausgeführt, daß das Aufbaumaterial eine Pulversäule 11 ausbildet, sobald die Aufbringeinrichtung 7 über die Bereitstellungseinrichtung 8 mit Aufbaumaterial beschickt wird. Zu diesem Zweck umfaßt die Aufbringeinrichtung 7 einen zylinderförmigen Rohrabschnitt 12, in dem sich die Pulversäule 11 definiert aufbaut.

Bei der Entnahme von Aufbaumaterial im Rahmen der Pulverentsorgung der Schichtbauanlage 1 wird das pulverförmige Aufbaumaterial unter alleiniger Wirkung der Schwerkraft, also in z-Richtung, von Zeit zu Zeit von einem ersten Raum, der Prozeßkammer 2, in einen räumlich von dem ersten Raum getrennten zweiten Raum, die Abfuhrleitung 10, transportiert, wobei sich auch die Atmosphären in diesen Räumen voneinander unterscheiden. Während dieses Transports das Aufbaumaterial wird eine Pulversäule 11 ausgebildet, die einen Gasaustausch zwischen den beiden Räumen 2, 10 verhindert. Die Entnahmeeinrichtung 9 dient als Transporteinrichtung für das Aufbaumaterial und ist derart ausgeführt, daß das Aufbaumaterial eine Pulversäule 11 ausbildet, sobald die Entnahmeeinrichtung 9 über die Prozeßkammer 2 mit Aufbaumaterial beschickt wird. Zu diesem Zweck umfaßt die Entnahmeeinrichtung 9 einen zylinderförmigen Rohrabschnitt 12, in dem sich die Pulversäule 11 definiert aufbaut.

Das entnommene Aufbaumaterial kann anschließend in einer Aufbereitungsanlage (nicht abgebildet) gereinigt oder anderweitig aufbereitet und in einem Kreislauf über die Bereitstellungseinrichtung 8 erneut dem Fertigungsprozeß zugeführt werden. Dabei kann auch die Aufbereitungsanlage nach der Erfindung arbeitende Transporteinrichtungen 7, 9 aufweisen.

Der Rohrabschnitt 12 definiert dabei in beiden Fällen den Transportweg zwischen den beiden Räumen, der mit Hilfe der Pulversäule 11 für einen Gastransport bzw. Gasaustausch versperrbar ist, gleichzeitig aber einen Transport des Aufbaumaterials von Raum zu Raum erlaubt. Der Rohrabschnitt 12 endet in beiden Fällen mit einer Austritts- bzw. Auslaßöffnung 13, durch die hindurch das Aufbaumaterial weiter transportiert wird. Diese Öffnung 13 ist jeweils mit einem nicht druckdichten Verschlußelement 14 verschließbar. Der Rohrabschnitt 12 muß nicht zylinderförmig sein, auch eine andere Ausführung ist möglich, beispielsweise in Gestalt eines Trichters (kegelstumpfförmig).

In beiden Fällen, also sowohl bei der Pulverversorgung als auch bei der Pulverentsorgung, wird die Höhe der Pulversäule 11 mit Hilfe einer Anzahl geeigneter Füllstandsensoren (nicht abgebildet) überwacht und ist mittels der Steuerungen veränderbar, wobei der Füllstand so eingestellt wird, daß kein Gasaustausch zwischen den Räumen erfolgt. Dies wird dadurch erreicht, daß die Zufuhr von Pulvermaterial zu der Pulversäule 11 sowie die Abfuhr von Pulvermaterial aus der Pulversäule 11 stets so gesteuert werden, daß immer eine Mindestfüllhöhe der Pulversäule 11 gewährleistet ist. Die Steuerungen regeln hierfür die pneumatische Pulverförderung in der Zufuhrleitung 8 bzw. der Abfuhrleitung 10 sowie den motorischen Antrieb der Verschlußelemente 14. Die jeweilige Mindestfüllhöhe für eine sichere Gastrennung ist dabei u.a. von dem Druckunterschied zwischen den beiden Räumen abhängig. Aus diesem Grund können geeignete, mit den Steuerungen verbundene Drucksensoren (nicht abgebildet) vorgesehen sein. Die Steuerungen ermitteln dann, unter Berücksichtigung des für den Aufbauprozeß benötigten, der Prozeßkammer 2 zuzuführenden Materialbedarfs, der Druckdifferenz zwischen den Räumen und weiterer Parameter, beispielsweise der Korngröße des verwendeten Aufbaumaterials, die erforderliche Mindestfüllhöhe und stellen während des Betriebs der Schichtbauanlage 1 durch entsprechende Steuerbefehle zum Auffüllen der Pulversäule 11 mit Aufbaumaterial und/oder Steuerbefehle zur Entnahme von Aufbaumaterial aus der Pulversäule **11** sicher, daß diese Füllhöhe stets eingehalten wird. Bei Bedarf kann die Höhe der Pulversäule **11** zur Ermöglichung eines gezielten Gasaustausches zwischen den beiden Räumen auch definiert verändert, insbesondere verringert, werden.

### Bezugszeichenliste

- 1: Schichtbauanlage
- 2: Prozeßkammer
- 3: Aufbauplattform
- 4: Objekt
- 5: Strahlungsquelle
- 6: Laserstrahl
- 7: Aufbringeinrichtung
- 8: Bereitstellungseinrichtung, Zufuhrleitung
- 9: Entnahmeeinrichtung
- 10: Abtransporteinrichtung, Abfuhrleitung
- 11: Pulversäule
- 12: Rohrabschnitt
- 13: Öffnung
- 14: Verschlußelement

## Patentansprüche

1. Verfahren zur additiven Fertigung, bei dem pulverförmiges Aufbaumaterial von einem ersten Raum (8; 2) in einen zweiten Raum (2; 10) einer Fertigungsanlage (1) für die additive Fertigung transportiert wird, wobei entweder der erste Raum oder der zweite Raum die Prozeßkammer (2) der Fertigungsanlage (1) ist, wobei sich die Atmosphären in diesen Räumen voneinander unterscheiden, wobei das Aufbaumaterial eine Pulversäule (11) ausbildet, die einen Gasaustausch zwischen den beiden Räumen beeinflußt,
**dadurch gekennzeichnet, daß** die Höhe der Pulversäule (11) zur Beeinflussung dieses Gasaustausches gezielt veränderbar ist,
wobei die Höhe der Pulversäule (11) zur Unterbindung eines Gasaustausches zwischen den beiden Räumen eingestellt wird
oder
wobei die Höhe der Pulversäule (11) zur Ermöglichung eines gezielten Gasaustausches zwischen den beiden Räumen verändert wird.

2. Verfahren nach Anspruch 1, wobei die Höhe der Pulversäule (11) überwacht wird.

3. Verfahren nach Anspruch 1 oder 2, wobei der Transport des Aufbaumaterials zur Laufzeit der Fertigungsanlage (1) erfolgt.

4. Fertigungsanlage (1) für die additive Fertigung,
mit einem ersten Raum (8; 2) und einem zweiten Raum (2; 10), wobei entweder der erste Raum oder der zweite Raum die Prozeßkammer (2) der Fertigungsanlage (1) ist, wobei die Räume ausgebildet sind, sich voneinander unterscheidende Atmosphären zu beinhalten,
und mit einer Transporteinrichtung (7; 9) zum Transportieren von pulverförmigem Aufbaumaterial von dem ersten Raum (8; 2) in den zweiten Raum (2; 10), wobei die Transporteinrichtung (7; 9) einen Rohrabschnitt (12) mit einer Öffnung (13) aufweist, welche Öffnung (13) von einem Verschlußelement (14) verschließbar ist,
und mit einer Steuerung zum Befüllen des Rohrabschnitts (12) mit Aufbaumaterial und/oder zum Betätigen des Verschlußelements (14),
sowie mit einer durch das Aufbaumaterial mittels der Transporteinrichtung (7; 9) während des Transports in dem Rohrabschnitt (12) ausgebildeten Pulversäule (11), die einen Gasaustausch zwischen den beiden Räumen beeinflußt,
**gekennzeichnet durch** Sensoren zur Überwachung der Höhe der Pulversäule (11), wobei die Höhe der Pulversäule (11) zur Beeinflussung dieses Gasaustausches mit Hilfe der Steuerung gezielt veränderbar ist,
wobei die Höhe der Pulversäule (11) zur Unterbindung eines Gasaustausches zwischen den beiden Räumen eingestellt wird
oder
wobei die Höhe der Pulversäule (11) zur Ermöglichung eines gezielten Gasaustausches zwischen den beiden Räumen verändert wird.

5. Verfahren zum Transportieren von pulverförmigem Aufbaumaterial von einem ersten Raum (8; 2) in einen zweiten Raum (2; 10) einer Fertigungsanlage (1) für die additive Fertigung, wobei entweder der erste Raum oder der zweite Raum die Prozeßkammer (2) der Fertigungsanlage (1) ist, wobei sich die Atmosphären in diesen Räumen voneinander unterscheiden, wobei das Aufbaumaterial eine Pulversäule (11) ausbildet, die einen Gasaustausch zwischen den beiden Räumen beeinflußt,
**dadurch gekennzeichnet, daß** die Höhe der Pulversäule (11) zur Beeinflussung dieses Gasaustausches gezielt veränderbar ist,
wobei die Höhe der Pulversäule (11) zur Unterbindung eines Gasaustausches zwischen den beiden Räumen eingestellt wird
oder
wobei die Höhe der Pulversäule (11) zur Ermöglichung eines gezielten Gasaustausches zwischen den beiden Räumen verändert wird.

## Claims

1. A method for additive manufacturing, in which powdered build material is transported from a first space (8; 2) into a second space (2; 10) of a manufacturing system (1) for additive manufacturing, wherein either the first space or the second space is the process chamber (2) of the manufacturing system (1), wherein the atmospheres in those spaces are different from one another, wherein the build material forms a powder column (11) that influences a gas exchange between the two spaces,
**characterized in that** the height of the powder column (11) is specifically modifiable in order to influence that gas exchange;
wherein the height of the powder column (11) is adjusted in order to suppress a gas exchange between the two spaces;
or
wherein the height of the powder column (11) is modified in order to enable a targeted gas exchange between the two spaces.

2. The method according to claim 1, wherein the height of the powder column (11) is monitored.

3. The method according to claim 1 or 2, wherein transportation of the build material occurs during the runtime of the manufacturing system (1).

4. A manufacturing system (1) for additive manufacturing,
having a first space (8; 2) and a second space (2; 10),
wherein either the first space or the second space is the process chamber (2) of the manufacturing system (1), wherein the spaces are configured to contain atmospheres that differ from one another,
and having a transportation device (7; 9) for transporting powdered build material from the first space (8; 2) into the second space (2; 10), wherein the transportation device (7; 9) comprises a tube section (12) having an opening (13), which opening (13) is closable by a closure element (14),
and having a control for filling the tube section (12) with build material and/or for actuating the closure element (14),
and having a powder column (11) formed in the tube section (12) by the build material by means of the transportation device (7; 9) during transport, which influences a gas exchange between the two spaces,
**characterized by** sensors for monitoring the height of the powder column (11), wherein the height of the powder column (11) is specifically modifiable with the aid of the control in order to influence that gas exchange,
wherein the height of the powder column (11) is adjusted in order to suppress a gas exchange between the two spaces
or
wherein the height of the powder column (11) is modified in order to enable a targeted gas exchange between the two spaces.

5. A method for transporting powdered build material from a first space (8; 2) into a second space (2; 10) of a manufacturing system (1) for additive manufacturing, wherein either the first space or the second space is the process chamber (2) of the manufacturing system (1), wherein the atmospheres in those spaces are different from one another, wherein the build material forms a powder column (11) that influences a gas exchange between the two spaces, **characterized in that** the height of the powder column (11) is specifically modifiable in order to influence that gas exchange,
wherein the height of the powder column (11) is adjusted in order to suppress a gas exchange between the two spaces
or
wherein the height of the powder column (11) is modified in order to enable a targeted gas exchange between the two spaces.

## Revendications

1. Procédé de fabrication additive, dans lequel un matériau de construction en poudre est transporté d'un premier espace (8 ; 2) vers un second espace (2 ; 10) d'une installation de fabrication (1) pour la fabrication additive, dans lequel soit le premier espace, soit le second espace est la chambre de traitement (2) de l'installation de fabrication (1), dans lequel les atmosphères dans ces espaces sont différentes l'une de l'autre, dans lequel le matériau de construction forme une colonne de poudre (11) qui influence un échange gazeux entre les deux espaces,
**caractérisé en ce que** la hauteur de la colonne de poudre (11) est spécifiquement modifiable afin d'influencer cet échange gazeux,
dans lequel la hauteur de la colonne de poudre (11) est réglée afin de supprimer un échange gazeux entre les deux espaces
ou
dans lequel la hauteur de la colonne de poudre (11) est modifiée afin de permettre un échange gazeux ciblé entre les deux espaces.

2. Procédé selon la revendication 1, dans lequel la hauteur de la colonne de poudre (11) est surveillée.

3. Procédé selon la revendication 1 ou 2, dans lequel le transport du matériau de construction a lieu pendant le fonctionnement de l'installation de fabrication (1).

4. Installation de fabrication (1) pour la fabrication additive,
avec un premier espace (8 ; 2) et un second espace (2 ; 10),
dans lequel soit le premier espace, soit le second espace est la chambre de traitement (2) de l'installation de fabrication (1), dans lequel les espaces sont conçus pour contenir des atmosphères différentes l'une de l'autre,
et avec un dispositif de transport (7 ; 9) pour transporter un matériau de construction en poudre du premier espace (8 ; 2) vers le second espace (2 ; 10), dans lequel le dispositif de transport (7 ; 9) comprend une section de tube (12) avec une ouverture (13), laquelle ouverture (13) est obturable par un élément de fermeture (14),
et avec un dispositif de commande pour remplir la section de tube (12) avec du matériau de construction et/ou pour actionner l'élément de fermeture (14),
ainsi qu'avec une colonne de poudre (11), formée par le matériau de construction au moyen du dispositif de transport (7 ; 9) pendant le transport dans la section de tube (12), laquelle colonne influence un échange gazeux entre les deux espaces,
**caractérisée par** des capteurs pour surveiller la hauteur de la colonne de poudre (11), dans lequel la hauteur de la colonne de poudre (11) est spécifiquement modifiable à l'aide du dispositif de commande afin d'influencer cet échange gazeux,
dans lequel la hauteur de la colonne de poudre (11) est réglée afin de supprimer un échange gazeux entre les deux espaces
ou
dans lequel la hauteur de la colonne de poudre (11) est modifiée afin de permettre un échange gazeux ciblé entre les deux espaces.

5. Procédé pour transporter un matériau de construction en poudre d'un premier espace (8 ; 2) vers un second espace (2 ; 10) d'une installation de fabrication (1) pour la fabrication additive, dans lequel soit le premier espace, soit le second espace est la chambre de traitement (2) de l'installation de fabrication (1), dans lequel les atmosphères dans ces espaces sont différentes l'une de l'autre, dans lequel le matériau de construction forme une colonne de poudre (11) qui influence un échange gazeux entre les deux espaces,
**caractérisé en ce que** la hauteur de la colonne de poudre (11) est spécifiquement modifiable afin d'influencer cet échange gazeux,
dans lequel la hauteur de la colonne de poudre (11) est réglée afin de supprimer un échange gazeux entre les deux espaces
ou
dans lequel la hauteur de la colonne de poudre (11) est modifiée afin de permettre un échange gazeux ciblé entre les deux espaces.
